(19) **Europäisches Patentamt / European Patent Office / Office européen des brevets**

(11) **EP 3 590 986 B1**

(12) **EUROPEAN PATENT SPECIFICATION**

(45) Date of publication and mention
of the grant of the patent:
**07.07.2021 Bulletin 2021/27**

(21) Application number: **18760988.8**

(22) Date of filing: **19.02.2018**

(51) Int Cl.:
*C08G 18/44* (2006.01)          *D06N 3/14* (2006.01)
*C08G 18/32* (2006.01)          *C08G 18/08* (2006.01)
*C08G 18/12* (2006.01)          *C08G 18/34* (2006.01)
*C08G 18/42* (2006.01)          *C08G 18/66* (2006.01)
*C08G 18/73* (2006.01)          *C08G 18/76* (2006.01)
*C08G 101/00* (2006.01)

(86) International application number:
**PCT/JP2018/005736**

(87) International publication number:
**WO 2018/159359 (07.09.2018 Gazette 2018/36)**

(54) **POLYURETHANE RESIN FOR SYNTHETIC LEATHER**

POLYURETHANHARZ FÜR KUNSTLEDER

RÉSINE DE POLYURÉTHANE POUR CUIR SYNTHÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2017 JP 2017036029**

(43) Date of publication of application:
**08.01.2020 Bulletin 2020/02**

(73) Proprietors:
• **Sanyo Chemical Industries, Ltd.**
**Kyoto 605-0995 (JP)**
• **Mitsubishi Chemical Corporation**
**Tokyo 100-8251 (JP)**

(72) Inventors:
• **ICHIHARA, Eiji**
**Kyoto-shi**
**Kyoto 605-0995 (JP)**

• **NEKOHASHI, Yuki**
**Kyoto-shi**
**Kyoto 605-0995 (JP)**
• **YOKOI, Tomomi**
**Kyoto-shi**
**Kyoto 605-0995 (JP)**

(74) Representative: **Hoffmann Eitle**
**Patent- und Rechtsanwälte PartmbB**
**Arabellastraße 30**
**81925 München (DE)**

(56) References cited:
**JP-A- H0 493 316          JP-A- H05 272 072
JP-A- 2005 171 226          JP-A- 2016 027 114
JP-A- 2016 169 248          JP-A- 2016 503 440
JP-A- 2017 119 755          US-A1- 2015 291 724**

EP 3 590 986 B1

## Description

TECHNICAL FIELD

The present invention relates to a polyurethane resin for synthetic leather.

BACKGROUND ART

Conventionally, a polycarbonate diol, which has excellent hydrolysis resistance and excellent weatherability, has been commonly used as a high molecular weight diol component of a polyurethane resin for synthetic leather. Yet, it is well known that when, for example, a polycarbonate diol derived from 1,6-hexanediol is used, while the resulting product has excellent hydrolysis resistance and excellent weatherability, it also has drawbacks such as hard texture and poor cold resistance, i.e., poor low-temperature characteristics.

The polycarbonate diol derived from 1,6-hexanediol is highly crystalline. A polyurethane resin obtained from the polycarbonate diol loses its elasticity due to crystallization of a soft segment component of the polyurethane resin, and thus has a hard texture or poor low-temperature characteristics.

Examples of known methods for reducing the crystallinity of a polycarbonate diol include: a method that uses a copolymerized polycarbonate diol of an alkanediol having 6 carbon atoms and an alkanediol having 9 carbon atoms (e.g., Patent Literature 1); a method that uses a copolymerized polycarbonate diol of an alkanediol having 5 carbon atoms and an alkanediol having 6 carbon atoms (e.g., Patent Literature 2); a method that uses a copolymerized polycarbonate diol of a branched alkanediol having 3 to 10 carbon atoms and an alkanediol having 6 carbon atoms (e.g., Patent Literature 3); a method that uses a copolymerized polycarbonate diol of a linear alkanediol having 9 carbon atoms, a branched alkanediol having 9 carbon atoms, and cyclohexanedimethanol (e.g., Patent Literature 4); a method that uses a copolymerized polycarbonate diol of an alkanediol having 4 carbon atoms and an alkanediol having 5 carbon atoms (e.g., Patent Literature 5 and Patent Literature 6); and a method that uses a copolymerized polycarbonate diol of an alkanediol having 4 carbon atoms and an alkanediol having 6 carbon atoms (e.g., Patent Literature 7). Patent Literature 8 relates to a polyurethane resin for artificial leather manufacture.

Yet, reducing the crystallinity of a polycarbonate diol by these methods causes some problems. For example, synthetic leather produced from a polyurethane resin containing the polycarbonate diol as a raw material, while having excellent low-temperature characteristics, loses its resilience when repeatedly deformed and thus remains folded or has insufficient mechanical strength.

CITATION LIST

- Patent Literature

Patent Literature 1: JP S60-195117 A
Patent Literature 2: JP H02-289616 A
Patent Literature 3: JP H02-158617 A
Patent Literature 4: JP H03-140318 A
Patent Literature 5: JP H04-7327 A
Patent Literature 6: JP H05-32754 A
Patent Literature 7: JP H05-51428 A
Patent Literature 8: EP 1 688 447 A1

SUMMARY OF INVENTION

- Technical Problem

The present invention was made in view of the above problems, and aims to provide a polyurethane resin that can provide synthetic leather having a soft texture, excellent mechanical strength, and excellent durability.

- Solution to Problem

As a result of extensive studies to solve the problems, the present inventors arrived at the present invention. Specifically, the present invention provides a polyurethane resin (D) for synthetic leather, the polyurethane resin containing, as essential constituent monomers: a polycarbonate diol (A1) having a structural unit derived from an alkanediol having 8 or more carbon atoms (a1) and a structural unit derived from an alkanediol having 3 to 5 carbon atoms (a2); a polycarbonate diol (A2) different from the polycarbonate diol (A1) and having a structural unit derived from an alkanediol having 4 to 6 carbon atoms (a3) and/or a polyester diol (A3); an organic diisocyanate (B); and a chain extender (C), wherein the polyurethane resin satisfies the following conditions (1) and (2). The present invention also provides an aqueous polyurethane resin dispersion (P) containing the polyurethane resin (D) that further contains, as a constituent monomer, a compound (G) having a hydrophilic group and an active hydrogen-containing group.

(1) The polycarbonate diol (A1) has a heat of fusion ($\Delta$H) of 40 to 100 J/g as determined by the method specified in JIS K 7121:1987.
(2) The polycarbonate diol (A2) and the polyester diol (A3) each have a heat of fusion ($\Delta$H) of 35 J/g or less as determined by the method specified in JIS K 7121:1987.

- Advantageous Effects of Invention

Synthetic leather made in the form of film from the polyurethane resin of the present invention has a soft texture, excellent mechanical strength, and excellent durability.

DESCRIPTION OF EMBODIMENTS

<Polyurethane resin (D)>

The polyurethane resin of the present invention contains, as essential constituent monomers, the polycarbonate diol (A1) having a structural unit derived from the alkanediol having 8 or more carbon atoms (a1) and a structural unit derived from an alkanediol having 3 to 5 carbon atoms (a2), the polycarbonate diol (A2) different from (A1) and having a structural unit derived from the alkanediol having 4 to 6 carbon atoms (a3) and/or the polyester diol (A3); the organic diisocyanate (B); and the chain extender (C). The polyurethane resin of the present invention is a polyurethane resin for synthetic leather.

Use of the polycarbonate diol (A1) in combination with the polycarbonate diol (A2) different from the polycarbonate diol (A1) and/or the polyester diol (A3) can provide synthetic leather having a soft texture, excellent mechanical strength, and excellent durability.

Having a structural unit derived from the alkanediol having 8 or more carbon atoms (a1), the polycarbonate diol (A1) is rendered crystalline.

The alkanediol (a1) has a carbon number of 8 or greater. When the carbon number is 7 or smaller, the synthetic leather made from the polyurethane resin has poor durability and low mechanical strength.

The carbon number of the alkanediol (a1) is preferably 12 or smaller in view of texture of the synthetic leather made from the polyurethane resin. The carbon number of the alkanediol (a1) is preferably 8 to 12, more preferably 9 to 12, particularly preferably 10, in view of the texture, durability, and mechanical strength described above and easy availability of the alkanediol (a1) .

Examples of the alkanediol (a1) include 5-methyl-2,4-heptanediol, 2-methyl-1,7-heptanediol, 1,8-octanediol, 2-methyl-1,8-octanediol, 1,9-nonanediol, 1,10-decanediol, 1,11-undecanediol, and 1,12-dodecanediol.

Of these, the alkanediol (a1) is preferably 1,8-octanediol, 1,9-nonanediol, 1,10-decanediol, 1,11-undecanediol, or 1,12-dodecanediol, more preferably 1,9-nonanediol, 1,10-decanediol, or 1,12-dodecanediol, particularly preferably 1,10-decanediol, in view of texture, durability, and mechanical strength of the synthetic leather made from the polyurethane resin and easy availability of the alkanediol (a1).

The alkanediol (a1) may be used alone or in combination of two or more thereof.

The polycarbonate diol (A1) further contains a structural unit derived from an alkanediol having 3 to 5 carbon atoms (a2), in view of texture, mechanical strength, and durability of the synthetic leather made from the polyurethane resin.

In view of mechanical strength of the synthetic leather made from the polyurethane resin, the carbon number of the alkanediol (a2) is 3 to 5, preferably 3 or 4.

Examples of the alkanediol (a2) include 1,2-propanediol, 1,3-propanediol, 2-methyl-1,3-propanediol, 1,3-butanediol, 1,4-butanediol, 2-methyl-1,4-butanediol, and 1,5-pentanediol. Of these, the alkanediol (a2) is preferably 1,3-propanediol, 1,4-butanediol, or 1,5-pentanediol, more preferably 1,4-butanediol, in view of mechanical strength of the synthetic leather made from the polyurethane resin. The alkanediol (a2) may be used alone or in combination of two or more thereof.

The molar percentage of the structural unit derived from the alkanediol (a1) relative to the total mole number of structural units derived from the alkanediol (a1) and the alkanediol (a2) in the polycarbonate diol (A1) is preferably 50 to 95% by mole, more preferably 55 to 90% by mole, particularly preferably 60 to 85% by mole. When the molar percentage of the structural unit derived from the alkanediol (a1) is more than 95% by mole, the crystallinity of the polyurethane resin may be too high, and the resulting polyurethane synthetic leather may have a poor texture. When the molar percentage of the structural unit derived from the alkanediol (a1) is less than 50% by mole, the polyurethane resin tends to lose its crystallinity, and the polyurethane synthetic leather made from the polyurethane resin may have low mechanical strength and poor durability.

The alkanediols (a1) and (a2) may be linear or branched alkanediols. Yet, linear alkanediols are preferred in view of chemical resistance, low-temperature characteristics, and durability of the synthetic leather made from the polyurethane resin. When the alkanediols (a1) and (a2) are branched alkanediols, the number of branches in the carbon chain is preferably 1 in view of the chemical resistance, low-temperature characteristics, and durability described above. When a branched chain is present, the smaller the carbon number of the branched chain, the better the chemical resistance, low-temperature characteristics, and heat resistance. The carbon number of the branched chain is preferably 2 or smaller, more preferably 1.

Specific examples of the polycarbonate diol (A1) include 1,8-octanediol/1,3-propanediol copolymerized polycarbonate diol, 1,8-octanediol/1,4-butanediol copolymerized polycarbonate diol, 1,8-octanediol/1,5-pentanediol copolymerized polycarbonate diol, 1,9-nonanediol/1,3-propanediol copolymerized polycarbonate diol, 1,9-nonanediol/1,4-butanediol copolymerized polycarbonate diol, 1,9-nonanediol/1,5-pentanediol copolymerized polycarbonate diol, 1,10-decanediol/1,3-propanediol copolymerized polycarbonate diol, 1,10-decanediol/1,4-butanediol copolymerized polycarbonate diol, 1,10-decanediol/1,5-pentanediol copolymerized polycarbonate diol, 1,12-dodecanediol/1,3-propanediol copolymerized polycarbonate diol, 1,12-dodecanediol/1,4-butanediol copolymerized polycarbonate diol, and 1,12-dodecanediol/1,5-pentanediol copolymerized polycarbonate diol.

Of these, the polycarbonate diol (A1) is preferably 1,8-octanediol/1,4-butanediol copolymerized polycarbonate diol, 1,9-nonanediol/1,4-butanediol copolymerized polycarbonate diol, 1,10-decanediol/1,4-butanediol copolymerized polycarbonate diol, or 1,12-dodecanediol/1,4-butanediol copolymerized polycarbonate diol, particularly preferably 1,10-decanediol/1,4-butanediol copolymerized polycarbonate diol, in view of texture, mechanical strength, and durability of the synthetic leather made from the polyurethane resin.

The polycarbonate diol (A1) may be used alone or in combination of two or more thereof.

The polycarbonate diol (A1) is crystalline. The crystallinity of the polycarbonate diol (A1) can be represented by its heat of fusion (∆H). The heat of fusion of the polycarbonate diol (A1) needs to be 40 to 100 J/g, preferably 45 to 90 J/g, more preferably 50 to 75 J/g. When the heat of fusion (∆H) of the polycarbonate diol (A1) is less than 40 J/g, the synthetic leather made from the polyurethane resin has poor durability and low mechanical strength. When the heat of fusion (∆H) is more than 100 J/g, the synthetic leather has poor texture.

The heat of fusion in the present invention is the heat of fusion (∆H) at a melting peak determined by the melting point measurement method specified in JIS K 7121:1987 using a differential scanning calorimeter. The melting point in the present invention is the melting point determined by the melting point measurement method specified in JIS K 7121:1987.

The polycarbonate diol (A1) and the polycarbonate diol (A2) (described later) can be produced, for example, by a method of transesterifying a diol and a carbonate ester such as diphenyl carbonate or dimethyl carbonate. Specifically, various methods described in US Patent No. 4013702 and US Patent No. 4105641 and by Schnell ("Polymer Reviews", Vol. 9, pp. 9-20, 1964) can be mentioned, for example. US Patent No. 4013702 and US Patent No. 4105641 describe synthesis of a copolymerized polycarbonate diol of 1,6-hexanediol and 1,4-butanediol. These documents each disclose a method of producing a copolymerized polycarbonate diol.

The polyurethane resin (D) of the present invention contains the polycarbonate diol (A2) different from the polycarbonate diol (A1) and/or the polyester diol (A3), in addition to the polycarbonate diol (A1).

The polycarbonate diol (A2) different from the polycarbonate diol (A1) has a structural unit derived from the alkanediol having 4 to 6 carbon atoms (a3).

The polycarbonate diol (A2) may or may not be a copolymer as long as it has a structural unit derived from the alkanediol having 4 to 6 carbon atoms (a3) as an essential structural unit, but the polycarbonate diol (A2) is preferably a copolymer.

The carbon number of the alkanediol (a3) is 4 to 6, preferably 5 to 6, more preferably 6, in view of texture of the synthetic leather made from the polyurethane resin.

Examples of the alkanediol having 4 to 6 carbon atoms (a3) include 1,4-butanediol, 1,5-pentanediol, 2-methyl-1,3-propanediol, neopentyl glycol, 2-ethyl-1,3-propanediol, 1,6-hexanediol, and 3-methyl-1,5-pentanediol. In view of texture of the synthetic leather made from the polyurethane resin, the alkanediol having 4 to 6 carbon atoms (a3) is preferably 1,4-butanediol, 1,5-pentanediol, 1,6-hexanediol, or 3-methyl-1,5-pentanediol, particularly preferably 1,6-hexanediol or 3-methyl-1,5-pentanediol.

The alkanediol having 4 to 6 carbon atoms (a3) may be used alone or in combination of two or more thereof.

When the polycarbonate diol (A2) is a homopolymer, examples of the homopolymer include 2-methyl-1,3-propanediol polycarbonate diol, neopentyl glycolpolycarbonate diol, 2-ethyl-1,3-propanediol polycarbonate diol, and 3-methyl-1,5-pentanediol polycarbonate diol.

When the polycarbonate diol (A2) is a copolymer, examples of the copolymer include 1,4-butanediol/1,5-pentanediol copolymerized polycarbonate diol, 1,4-butanediol/1,6-hexanediol copolymerized polycarbonate diol, 1,5-pentanediol/1,6-hexanediol copolymerized polycarbonate diol, 2-methyl-1,3-propanediol/1,6-hexanediol copolymerized polycarbonate diol, neopentyl glycol/1,6-hexanediol copolymerized polycarbonate diol, 3-methyl-1,5-pentanediol/1,6-hexanediol copolymerized polycarbonate diol, and 2-ethyl-1,3-propanediol/1,6-hexanediol copolymerized polycarbonate diol.

Of these, the polycarbonate diol (A2) is preferably 1,5-pentanediol/1,6-hexanediol copolymerized polycarbonate diol, neopentyl glycol/1,6-hexanediol copolymerized polycarbonate diol, 2-ethyl-1,3-propanediol/1,6-hexanediol copolymerized polycarbonate diol, or 3-methyl-1,5-pentanediol/1,6-hexanediol copolymerized polycarbonate diol, particularly preferably 3-methyl-1,5-pentanediol/1,6-hexanediol copolymerized polycarbonate diol, in view of texture, mechanical strength, and durability of the synthetic leather made from the polyurethane resin.

The polycarbonate diol (A2) may be used alone or in combination of two or more thereof.

The polycarbonate diol (A2) is low crystalline or amorphous. In view of texture, mechanical strength, and durability of the synthetic leather made from the polyurethane resin, the heat of fusion of the polycarbonate diol (A2) needs to be 35 J/g or less. The polycarbonate diol (A2) is preferably amorphous, i.e., no melting peak is observed by the melting point measurement method specified in JIS K 7121:1987 using a differential scanning calorimeter and the heat of fusion ($\Delta$H) is 0 J/g.

The polyester diol (A3) is not limited as long as it is a polyester diol having a heat of fusion ($\Delta$H) of 35 J/g or less. Examples include a polyester diol obtainable by reacting a dicarboxylic acid with a low molecular weight diol and/or a polyether diol (described later) having a number average molecular weight (hereinafter abbreviated as Mn) of 1000 or less, and a polylactone diol obtainable by ring-opening polymerization of lactone.

Examples of the low molecular weight diol include ethylene glycol, diethylene glycol, propylene glycol, 1,3-butanediol, 1,4-butanediol, neopentyl glycol, 1,6-hexanediol, 3-methyl-1,5-pentanediol, alicyclic diols (e.g., 1,4-bis(hydroxymethyl)cyclohexane), and diols having an aromatic ring (e.g., 1,4-bis(hydroxyethyl)benzene and an ethylene oxide adduct of bisphenol A).

The low molecular weight diol may be used alone or in combination of two or more thereof.

Examples of the dicarboxylic acid include aliphatic dicarboxylic acids (e.g., succinic acid, adipic acid, azelaic acid, and sebacic acid), aromatic dicarboxylic acids (e.g., terephthalic acid, isophthalic acid, and phthalic acid), and ester-forming derivatives of these dicarboxylic acids (e.g., acid anhydrides and lower alkyl (carbon number of 1 to 4) esters). Examples of the lactone include $\varepsilon$-caprolactone, $\gamma$-butyrolactone, and $\gamma$-valerolactone.

The dicarboxylic acid and the lactone may each be used alone or in combination of two or more thereof.

Polyesterification can be achieved by a common method, such as condensation polymerization of a low molecular weight diol and a dicarboxylic acid, or addition of a lactone to a low molecular weight diol.

The polyester diol (A3) is low crystalline or amorphous. In view of texture, mechanical strength, and durability of the synthetic leather made from the polyurethane resin, the heat of fusion of the polyester diol (A3) needs to be 35 J/g or less. The polyester diol (A3) is preferably amorphous, i.e., no melting peak is observed by the melting point measurement method specified in JIS K 7121:1987 using a differential scanning calorimeter and the heat of fusion ($\Delta$H) is 0 J/g.

Examples of the method of obtaining an amorphous polyester diol include a method that uses a branched low molecular weight diol and a method that uses two or more low molecular weight diols.

Specific examples of the amorphous polyester diol include polyneopentyl adipate diol, poly(3-methyl-1,5-pentane adipate) diol, and poly[(ethylene adipate)-co-(butylene adipate)] diol.

The polyester diol (A3) may be used alone or in combination of two or more thereof.

The Mn of each of the polycarbonate diol (A1), the polycarbonate diol (A2), and the polyester polyol (A3) is preferably 500 to 5000, more preferably 700 to 4500, particularly preferably 1000 to 4000, in view of texture and mechanical strength of the synthetic leather made from the polyurethane resin. The Mn of diol in the present invention is determined from the hydroxyl value. The hydroxyl value is measured by the method specified in JIS K 0070:1992 (potentiometric titration method).

The ratio of the polycarbonate diol (A1) to the polycarbonate diol (A2) and the polyester polyol (A3) is preferably determined such that the ratio is within a range that does not inhibit crystallization of the polycarbonate diol (A1).

Specifically, in view of texture, durability, and mechanical strength of the synthetic leather made from the polyurethane resin, the difference (T1 - Tm) is preferably 1.5°C or less, more preferably 1.0°C or less, particularly preferably 0.8°C or less, where T1 is the melting point of the polycarbonate diol (A1) and Tm is the melting point of a mixture (AM) obtained by mixing the polycarbonate diol (A1) and the polycarbonate diol (A2) and/or the polyester diol (A3) in the same ratio as that of these components as constituent monomers of the polyurethane resin (D). The difference (T1 - Tm) between the melting point (T1) of the polycarbonate diol (A1) and the melting point (Tm) of the mixture (AM) is preferably 0°C or more. In view of texture, durability, and mechanical strength of the synthetic leather made from the polyurethane resin, the difference (T1 - Tm) between the T1 and the Tm is more preferably 0°C to 1.5°C, still more preferably 0°C to 1.0°C, particularly preferably 0°C to 0.8°C.

In view of texture, durability, and mechanical strength of the synthetic leather made from the polyurethane resin, the mixture (AM) preferably has a heat of fusion (ΔH) of 10 to 55 J/g, more preferably 20 to 50 J/g, particularly preferably 25 to 45 J/g.

The weight percentage of the polycarbonate diol (A1) relative to the total weight of the polycarbonate diol (A1), the polycarbonate diol (A2), and the polyester diol (A3) is preferably 30 to 80% by weight, more preferably 40 to 70% by weight. When the weight percentage of the polycarbonate diol (A1) is 30% by weight or more, the synthetic leather made from the polyurethane resin has good durability. When the weight percentage of the polycarbonate diol (A1) is 80% by weight or less, the synthetic leather has a good texture. The weight percentage is the weight percentage of the polycarbonate diol (A1) as the constituent monomer of the polyurethane resin (D) of the present invention.

In addition to the polycarbonate diol (A1), the polycarbonate diol (A2), and the polyester diol (A3), another high molecular weight diol (A4) may also be used as a diol component of the polyurethane resin for synthetic leather of the present invention, as long as it does not adversely affect the properties. The high molecular weight diol (A4) is preferably used in an amount of 0 to 40% by weight, more preferably 5 to 35% by weight, relative to the total weight of the diol components (A1) to (A3). The high molecular weight diol (A4) may be used alone or in combination of two or more thereof.

Examples of the high molecular weight diol (A4) include a polyether diol and a polyester diol having an Mn of 500 to 5,000, preferably 1,000 to 4,000.

Examples of the polyether diol include compounds obtained by adding an alkylene oxide (hereinafter abbreviated as AO) to the low molecular weight diols.

Examples of the AO include ethylene oxide (hereinafter abbreviated as EO), propylene oxide (hereinafter abbreviated as PO), tetrahydrofuran (hereinafter abbreviated as THF), and 3-methyltetrahydrofuran (hereinafter abbreviated as 3-M-THF).

The AO may be used alone or in combination of two or more thereof. In the latter case, the AO may be added by block addition, random addition, or a combination thereof.

Preferred examples of the AO include EO alone, PO alone, THF alone, 3-M-THF alone, a combination of PO and EO, and a combination of PO and/or EO and THF, and a combination of THF and 3-M-THF (the combination may be random, block, or a combination thereof).

Specific examples of these polyether diols include polyethylene glycol, polypropylene glycol, polytetramethylene ether glycol, poly-3-methyl-tetramethylene ether glycol, THF/EO copolymer diol, and THF/3-M-THF copolymer diol. Preferred of these is polytetramethylene ether glycol.

The polyester diol as the high molecular weight diol (A4) is a polyester diol obtainable from the raw materials by the production method mentioned as examples in the description of the polyester diol (A3). Examples include those having a heat of fusion higher than 35 J/g.

The AO can be added to the low molecular weight diol by a usual method which is carried out in a single stage or multistage in the absence or presence of a catalyst (e.g., an alkali catalyst, an amine catalyst, or an acid catalyst) (particularly in a later stage of AO addition) at normal pressure or increased pressure.

Examples of the organic diisocyanate (B) in the present invention include an aromatic diisocyanate having 6 to 20 carbon atoms (excluding carbon atoms in NCO groups, the same applies hereinafter), an aliphatic diisocyanate having 2 to 18 carbon atoms, an alicyclic diisocyanate having 4 to 15 carbon atoms, an aromatic-aliphatic diisocyanate having 8 to 15 carbon atoms, and modified products of these diisocyanates (e.g., carbodiimide-modified products, urethane-modified products, and uretdione-modified products).

Specific examples of the aromatic diisocyanate having 6 to 20 carbon atoms include 1,3- or 1,4-phenylene diisocyanate, 2,4- or 2,6-tolylene diisocyanate, 2,4'- or 4,4'-diphenylmethane diisocyanate (hereinafter abbreviated as MDI), 4,4'-diisocyanate biphenyl, 3,3'-dimethyl-4,4'-diisocyanate biphenyl, 3,3'-dimethyl-4,4'-diisocyanate diphenylmethane, and 1,5-naphthylene diisocyanate.

Specific examples of the aliphatic diisocyanate having 2 to 18 carbon atoms include ethylene diisocyanate, tetramethylene diisocyanate, hexamethylene diisocyanate, dodecamethylene diisocyanate, 2,2,4-trimethylhexamethylene diisocyanate, lysine diisocyanate, 2,6-diisocyanato methyl caproate, bis(2-isocyanatoethyl) carbonate, and 2-isocyanatoethyl-2,6-diisocyanatohexate.

Specific examples of the alicyclic diisocyanate having 4 to 15 carbon atoms include isophorone diisocyanate, dicyclohexylmethane-4,4'-diisocyanate, cyclohexylene diisocyanate, methylcyclohexylene diisocyanate, bis(2-isocyanatoethyl)-4-cyclohexylene-1,2-dicarboxylate, and 2,5- or 2,6-norbornane diisocyanate.

Specific examples of the aromatic-aliphatic diisocyanate having 8 to 15 carbon atoms include m- or p-xylylene diisocyanate and α,α,α',α'-tetramethyl xylylene diisocyanate.

Of these, the organic diisocyanate (B) is preferably an aromatic diisocyanate having 6 to 20 carbon atoms, particularly preferably MDI, in view of texture, durability, and mechanical strength of the synthetic leather made from the polyurethane resin.

Examples of the chain extender (C) include water, the low molecular weight diols, aliphatic diamines (e.g., ethylene diamine), alicyclic diamines (e.g., isophorone diamine), aromatic diamine (e.g., 4,4-diaminodiphenylmethane), aromatic-aliphatic diamines (e.g., xylene diamine), alkanolamines (e.g., ethanolamine), hydrazines, and dihydrazides (e.g., adipic acid dihydrazide). Of these, the chain extender (C) is preferably water, a low molecular weight diol, or an aromatic diamine, more preferably water, ethylene glycol, 1,4-butanediol, or 4,4'-diaminodiphenylmethane. The chain extender (C) may be used alone or in combination of two or more thereof. The Mn or chemical formula weight of the chain extender (C) is preferably 250 or less.

The ratio of equivalents of isocyanate groups of the organic diisocyanate (B) to the total equivalent of active hydrogen-containing groups of the active hydrogen components (i.e., the polycarbonate diol (A1), the polycarbonate diol (A2), the polyester diol (A3), the high molecular weight diol (A4), and the chain extender (C)) in the polyurethane resin (D) of the present invention is preferably 0.95 to 1.1, more preferably 0.97 to 1.05, in view of increasing the molecular weight of the polyurethane resin (D).

As for the amount of the chain extender (C), the ratio of equivalents of active hydrogen-containing groups of the chain extender (C) to the total equivalent of hydroxyl groups of the polycarbonate diol (A1), the polycarbonate diol (A2), the polyester diol (A3), and the high molecular weight diol (A4) is preferably 0.2 to 10, more preferably 0.5 to 5.

Examples of the method of producing the polyurethane resin (D) of the present invention include a one-shot method in which the active hydrogen components ((A1) to (A4) and (C)) are simultaneously reacted with the organic diisocyanate (B) and a prepolymer method in which the components (A1) to (A4) and (B) are reacted first to obtain a urethane prepolymer and the urethane prepolymer is then further reacted with the component (C).

The reaction temperature of the urethane-forming reaction is preferably 20°C to 160°C, more preferably 40°C to 80°C. If necessary, a polymerization terminator such as a monoalcohol (e.g., methanol, ethanol, butanol, or cyclohexanol) or a monoamine (e.g., diethylamine, dibutylamine, or cyclohexylamine) can be used. In order to promote the reaction, the reaction can use a catalyst that is preferably used in a polyurethane reaction, if necessary. Examples of the catalyst include amine catalysts (e.g., triethylamine, triethylenediamine, and cyclic amidines described in US Patent No. 4524104 such as 1,8-diazabicyclo[5.4.0]undec-7-ene ("DBU" available from San-Apro Ltd.)), and tin catalysts (e.g., dibutyltin dilaurate and dioctyltin dilaurate). The amount of the catalyst is preferably 1% by weight or less relative to the polyurethane resin.

The polyurethane resin (D) of the present invention is produced in the presence or absence of an organic solvent. In the case of an absence of an organic solvent, the polyurethane resin (D) can be produced, for example, by a method in which an organic solvent is added later or a method in which a solid resin is produced first and then is dissolved in a solvent.

Examples of an organic solvent (E) that is used in the production of the polyurethane resin (D) include amide solvents (e.g., N,N-dimethylformamide (hereinafter abbreviated as DMF), N,N-dimethylacetamide, and N-methylpyrrolidone); sulfoxide solvents (e.g., dimethylsulfoxide (hereinafter abbreviated as DMSO)); ketone solvents (e.g., methyl ethyl ketone and acetone); ether solvents (e.g., dioxane and tetrahydrofuran (THF)); ester solvents (e.g., methyl acetate, ethyl acetate, and butyl acetate); aromatic solvents (e.g., toluene and xylene); and acetonitrile. Preferred of these are amide solvents, and particularly preferred is DMF. The organic solvent (E) may be used alone or in combination of two or more thereof.

The Mn of the polyurethane resin (D) is preferably 20,000 or more in view of strength of the resin, and is preferably 500,000 or less in view of viscosity stability and workability. The Mn is more preferably 30,000 to 150,000.

The Mn of the polyurethane resin (D) of the present invention can be measured by gel permeation chromatography, for example, by the following conditions.

Device: HLC-8220 GPC (available from Tosoh Corporation)
Column: Guardcolumn $\alpha$ + TSKgel $\alpha$-M (both available from Tosoh Corporation)
Sample solution: 0.125% by weight solution in DMF
Amount of solution injected: 100 $\mu$l
Flow rate: 1 ml/min
Measurement temperature: 40°C
Detector: refractive index detector
Standard substance: standard polystyrene

<Porous sheet material>

A porous sheet material produced from the polyurethane resin (D) of the present invention is obtained by applying a solution (F) of the polyurethane resin (D) to a substrate for wet treatment.

The solution (F) of the polyurethane resin (D) is a solution of the polyurethane resin (D) dissolved in the organic solvent (E). The resin concentration in the solution (F) is preferably 10% by weight or more in view of strength of the porous sheet material, and is preferably 50% by weight or less in view of viscosity stability and workability. The resin concentration in the solution (F) is more preferably 12 to 35% by weight.

The polyurethane resin (D) and its solution (F) may contain various additives, if necessary. Examples include colorants such as titanium oxide; various stabilizers such as ultraviolet absorbers (e.g., benzophenone ultraviolet absorbers and benzotriazole ultraviolet absorbers) and antioxidants (e.g., hindered phenol such as 4,4-butylidene-bis(3-methyl-6-1-butylphenol), and organic phosphites such as triphenyl phosphite and trichloroethyl phosphite); inorganic fillers (e.g., calcium carbonate); and known coagulation modifiers (e.g., higher alcohols such as cetyl alcohol and stearyl alcohol (JP S42-22719 B); crystalline organic compounds such as purified octadecyl alcohol and purified stearyl alcohol (JP S56-41652 B); and hydrophobic nonionic surfactants such as sorbitan monostearate and sorbitan palmitate (JP S45-39634 B and JP S45-39635 B)). The total amount (content) of these additives is preferably 10% by weight or less, more preferably 0.5 to 5% by weight, relative to the polyurethane resin (D). The additives may be used alone or in combination of two or more thereof.

The coagulation value of the polyurethane resin (D) of the present invention is preferably 2 to 5, more preferably 2.3 to 4.7, particularly preferably 2.5 to 4.5, in view of rate of coagulation.

To determine the coagulation value, a 1% by weight solution of the polyurethane resin in DMF is prepared, and water at 25°C is dropped to 100 g of the solution under stirring with a stirrer while the temperature of the solution is controlled to 25°C. The coagulation value is the amount (ml) of dripping water required for the solution (colorless solution) to become cloudy in white. The coagulation value indicates the degree of hydrophilicity of the polyurethane resin and serves as an indicator of the rate of coagulation of the polyurethane resin in the production of a porous sheet by the wet film-forming method in which a solution of the polyurethane resin is applied to a substrate. For example, use of a highly hydrophobic, high molecular weight diol reduces the coagulation value of the polyurethane resin, and use of a highly hydrophilic, high molecular weight diol increases the coagulation value of the polyurethane resin.

Any substrate can be used in the production of the porous sheet material. Examples include woven fabrics, knitted fabrics, nonwoven fabrics, felt, and raised fabrics which are made of natural or synthetic fibers (e.g., wool, cotton, polyamide, polyester, rayon, and mixed fibers of two or more thereof), paper, plastics, films, metal sheets, and glass sheets. In the present invention, a sheet material can be obtained by releasing from the substrate, or a sheet material can be obtained in the integrated form with the substrate.

When applying the solution (F) of the polyurethane resin (D) to the substrate for wet treatment, the application of the solution (F) (coating and/or immersion) and the wet treatment can be performed by a usual method of wet treatment. For example, the methods (a), (b), (c), and (d) described in columns 10 and 11 of US Patent No. 3284274 can be used.

For a coagulation bath for the wet treatment, a solvent (poor solvent) that will not dissolve the polyurethane resin (D) of the present invention is used. Examples include water, ethylene glycol, glycerol, ethylene glycol monoethyl ether, and a mixture thereof, with water being preferred.

Only the poor solvent may be used for the coagulation bath, or a solvent mixture may be used which is obtained by mixing the poor solvent with the organic solvent (E) (e.g., DMF or DMSO) and which will not dissolve the polyurethane resin (D) of the present invention.

Alternatively, the solution (F) of the polyurethane resin (D) may be coagulated with water and water vapor; or may be first partially coagulated with water vapor, followed by immersion in a coagulation bath. Still alternatively, a colloidal dispersion obtained by adding the poor solvent to the solution (F) of the polyurethane resin (D) may be applied to a substrate, followed by immersion in a coagulation bath. The temperature of the coagulation bath is preferably 20°C to 60°C.

The wet treatment is followed by desolvation, washing (using water, methanol, or the like), and drying by usual methods. An anionic, nonionic, cationic, or amphoteric surfactant can also be used to promote desolvation. Crosslinking treatment may also be performed by the method described in GB Patent No. 1168872.

The resulting porous sheet material can be used as is, or can be used in the form of a laminate so that various properties can be imparted to the porous sheet material. Specifically, the porous sheet material can be used in the form of a laminate obtainable by applying and drying a polyurethane resin solution, a solution of a different polymer (e.g., vinyl chloride or cellulosic resin), or an emulsion to the porous sheet material; or in the form of a laminate obtainable by applying the polymer solution or emulsion to a separate release paper, drying the polymer solution or emulsion into a coating film, laminating the porous sheet material with the coating film, and removing the release paper.

The porous sheet material obtainable from the polyurethane resin (D) of the present invention has uniform micropores. Thus, the porous sheet material has a soft texture and is excellent in durability, mechanical strength, hydrolysis resistance, and weatherability. Thus, the porous sheet material obtainable from the polyurethane resin of the present invention is highly useful as synthetic leather alternative to natural leather in a wide range of applications such as shoes, bags, furniture, and vehicle seats.

<Aqueous polyurethane resin dispersion (P)>

The polyurethane resin (D) of the present invention can be provided as a polyurethane resin that further contains, as an essential constituent monomer, a compound (G) having a hydrophilic group and an active hydrogen-containing group. The polyurethane resin (D) further containing the compound (G) as an essential constituent monomer is also referred to as a polyurethane resin (D1). When the polyurethane resin (D) is obtained as the polyurethane resin (D1), the polyurethane resin (D) is suitably used as an aqueous polyurethane resin dispersion (P) containing the polyurethane resin (D1) and water. The nonporous sheet material obtained by drying the aqueous polyurethane resin dispersion (P) into a film has a soft texture and is excellent in durability, mechanical strength, hydrolysis resistance, and weatherability, and is thus highly useful as synthetic leather alternative to natural leather in a wide range of applications such as shoes, bags, furniture, and vehicle seats.

The weight percentage of the compound (G) having a hydrophilic group and an active hydrogen-containing group relative to the total weight of the components (A1) to (A4) and (G) is preferably 0.5 to 14% by weight, more preferably 0.8 to 10% by weight, particularly preferably 1 to 7% by weight, in view of stability of the aqueous polyurethane resin dispersion and heat resistance and weatherability of the resulting film.

In the present invention, the hydrophilic group of the compound (G) having a hydrophilic group and an active hydrogen-containing group refers to a carboxyl group, a carboxylate group, a sulfo group, and a sulfonato group. The compound (G) contains one or more of these hydrophilic groups. The active hydrogen-containing group refers to an active hydrogen-containing group other than the carboxyl group and the sulfo group. Examples of the active hydrogen-containing group include a hydroxyl group, an amino group, and a thiol group, with a hydroxyl group being preferred.

Examples of the compound (G) having a hydrophilic group and an active hydrogen-containing group include compounds having 2 to 10 carbon atoms and having a carboxyl group such as dialkylol alkanoic acids (e.g., 2,2-dimethylol propionic acid, 2,2-dimethylol butanoic acid, 2,2-dimethylol heptanoic acid, and 2,2-dimethylol octanoic acid), tartaric acid, and amino acids (e.g., glycine, alanine, and valine); compounds having 2 to 16 carbon atoms and having a sulfo group such as 3-(2,3-dihydroxy propoxy)-1-propanesulfonic acid and sulfoisophthalic acid di(ethylene glycol) ester; compounds having 2 to 10 carbon atoms and having a sulfamic acid group such as N,N-bis(2-hydroxyethyl)sulfamic acid; and salts formed by neutralization of these compounds with a neutralizer (described later). Preferred among these are compounds having a carboxyl group and/or a carboxylate group, and particularly preferred are 2,2-dimethylol propionic acid and 2,2-dimethylol butanoic acid. The compound (G) having a hydrophilic group and an active hydrogen-containing group may be used alone or in combination of two or more thereof.

The total amount of the carboxyl group and the carboxylate group in the polyurethane resin (D1) is preferably 0.09 to 0.27 mmol/g, more preferably 0.14 to 0.25 mmol/g based on the weight of polyurethane resin (D1), in view of stability of the aqueous polyurethane resin dispersion (P) and heat resistance and weatherability of the resulting film.

The total amount of the carboxyl group and the carboxylate group of the polyurethane resin in the present invention can be calculated from the acid value that is measured by the method specified in JIS K 0070:1992 (potentiometric titration method). For the measurement, 3 to 10 g of the aqueous polyurethane resin dispersion (P) is dried by heating at 130°C for 45 minutes, the residue obtained from drying is washed with water and then dried again by heating at 130°C for 45 minutes, and the dried product is dissolved in dimethylformamide.

Examples of the neutralizer used for neutralization of the compound (G) include ammonia, amine compounds having 1 to 20 carbon atoms, and hydroxides of alkali metals (e.g., sodium, potassium, and lithium).

Examples of the amine compound having 1 to 20 carbon atoms include primary amines such as monomethylamine, monoethylamine, monobutylamine, monoethanolamine, and 2-amino-2-methyl-1-propanol; secondary amines such as dimethylamine, diethylamine, dibutylamine, diethanolamine, and N-methyldiethanolamine; and tertiary amines such as trimethylamine, triethylamine, dimethylethylamine, and triethanolamine.

Of these, the amine compound having 1 to 20 carbon atoms is preferably an amine compound having a low vapor pressure at 25°C, more preferably triethylamine, monoethanolamine, diethanolamine, or N-methyldiethanolamine, in view of decreasing odor of the aqueous polyurethane resin dispersion (P) and water resistance of the resulting film.

The aqueous polyurethane resin dispersion (P) essentially contains the polyurethane resin (D1) and water, and if necessary, may also contain a surfactant, a crosslinking agent, and a weathering stabilizer. The surfactant, the crosslinking agent, and the weathering stabilizer each may be used alone or in combination of two or more thereof.

Examples of the surfactant include nonionic surfactants, anionic surfactants, cationic surfactants, amphoteric surfactants, and other emulsifying dispersants.

The amount of the surfactant is preferably 0 to 20% by weight, more preferably 0.1 to 10% by weight, particularly preferably 0.2 to 5% by weight, based on the weight of the polyurethane resin (D1), in view of water resistance of the dried film.

The crosslinking agent may be an aqueous or water-dispersible compound having, in the molecule, two or more functional groups capable of reacting with carboxyl groups in the polyurethane backbone. Examples of functional groups capable of reacting with carboxyl groups include carbodiimide, oxazoline, epoxy, cyclocarbonate, and aziridine groups. The amount of the crosslinking agent is preferably 1.0 to 20% by weight, more preferably 1.5 to 10% by weight, based on the weight of the polyurethane resin (D1).

Examples of the weathering stabilizer include antioxidants (e.g., hindered phenol antioxidant, sulfur antioxidant, and phosphorus antioxidant), ultraviolet absorbers (e.g., benzotriazole ultraviolet absorber, triazine ultraviolet absorber, benzophenone ultraviolet absorber, and benzoate ultraviolet absorber), and hindered amine light stabilizers. The amount of the weathering stabilizer is preferably 0.1 to 10% by weight, more preferably 0.2 to 5% by weight, based on the amount of the polyurethane resin (D1).

The volume average particle size of the aqueous polyurethane resin dispersion (P) is preferably 0.01 to 1 $\mu$m, more preferably 0.02 to 0.7 $\mu$m, particularly preferably 0.03 to 0.5 $\mu$m, in view of storage stability and viscosity.

The solids concentration of the aqueous polyurethane resin dispersion (P) of the present invention is preferably 20 to 70% by weight, more preferably 30 to 60% by weight.

Examples of the method of producing the aqueous polyurethane resin dispersion (P) include the following methods [1] and [2].

[1] A method in which the polycarbonate diol (A1), the polycarbonate diol (A2) and/or the polyester diol (A3), the chain extender (C), the compound (G) having a hydrophilic group and an active hydrogen-containing group, the organic diisocyanate (B), and if necessary, an organic solvent are fed into a reaction vessel and reacted in a single stage or multistage to form the polyurethane resin (D1); a hydrophilic group moiety introduced by the compound (G) is neutralized by a neutralizer; and the polyurethane resin (D1) is dispersed in an aqueous medium in the presence or absence of an organic solvent, followed by, if necessary, distillation of the organic solvent.

[2] A method in which the polycarbonate diol (A1), the polycarbonate diol (A2) and/or the polyester diol (A3), the compound (G) having a hydrophilic group and an active hydrogen-containing group, the organic diisocyanate (B), and if necessary, an organic solvent are fed into a reaction vessel and reacted in a single stage or multistage to form a urethane prepolymer; a hydrophilic group moiety introduced by the compound (G) is neutralized by a neutralizer; and the urethane prepolymer is dispersed in an aqueous medium and reacted with the chain extender (C) and, if necessary, a reaction terminator until isocyanate groups are substantially exhausted, followed by distillation of the organic solvent.

In the production method [2], the chain extender (C) and a reaction terminator that is used if necessary may be dissolved in an aqueous dispersant for the reaction of the urethane prepolymer with the chain extender (C) and the reaction terminator (if necessary). Yet, in view of stability of the aqueous dispersant, preferably, the chain extender (C) and a reaction terminator (if necessary) are added to the aqueous medium after the urethane prepolymer is dispersed in the aqueous medium. Examples of the aqueous medium in the present invention include water and a mixture of water and the organic solvent (E).

To form the urethane prepolymer, preferably, the organic diisocyanate (B) is reacted with the active hydrogen components in an equivalent ratio of isocyanate group/active hydrogen-containing group of 1.01 to 2.0. The prepolymer is formed by reaction preferably at 20°C to 150°C, more preferably 60°C to 110°C, for preferably 2 to 15 hours. The prepolymer can be formed in the presence or absence of an organic solvent that is substantially non-reactive with an isocyanate group. After the reaction, the prepolymer preferably has a free isocyanate group content of 0.5 to 5%. The organic solvent that is used for the reaction may be the organic solvent (E), preferably an organic solvent having a boiling point lower than 100°C and substantially non-reactive with an isocyanate group (e.g., ketones such as methyl ethyl ketone and acetone; esters such as methyl acetate and ethyl acetate; acetonitrile; and tetrahydrofuran). Use of an organic solvent having a boiling point lower than 100°C facilitates complete removal of only the organic solvent, preventing the organic solvent from remaining in the aqueous dispersant and emerging during processing. Such an organic solvent is also less likely to remain in the resulting film, thus preventing time-dependent changes in properties of the film.

In order to promote the prepolymer-forming reaction, if necessary, a catalyst that is used for the urethane-forming reaction may be used.

EXAMPLES

Hereinafter, the present invention is more specifically described with reference to examples, but the present invention is not limited to these examples. In the following description, the "part(s)" means" part(s) by weight.

Example 1

To a four-neck flask equipped with a stirrer and a thermometer were added 100 parts of 1,10-decanediol/1,4-butanediol (mole ratio: 91/9) copolymerized polycarbonate diol (A1-1) ("BENEBiOL NL2090DB" available from Mitsubishi Chemical Corporation) having an Mn of 1,979 (hydroxyl value = 56.7 mg KOH/g), 100 parts of 3-methyl-1,5-pentanediol/1,6-hexanediol (mole ratio: 50/50) copolymerized polycarbonate diol (A2-1) having an Mn of 2,000 (hydroxyl value = 56.1 mg KOH/g), 7.6 parts of ethylene glycol (C-1), 61.6 parts of MDI (B-1), and 628 parts of DMF. A reaction was performed at 70°C for 15 hours in a dry nitrogen atmosphere, thus obtaining a solution of a polyurethane resin (D-1) having a resin concentration of 30% by weight, a viscosity of 80,000 mPa·s/20°C, and a coagulation value of 3.8.

To measure the viscosity, the temperature of the solution of the polyurethane resin (D-1) was maintained in a constant temperature water tank at 20°C for 5 hours, and a B-type viscometer (BH viscometer available from Toki Sangyo Co., Ltd.) was used with a No. 7 rotor at a rotation speed of 20 rpm. The same applies hereinafter.

Example 2

To a reaction vessel of the same type as the one used in Example 1 were added 140 parts of 1,10-decanediol/1,4-butanediol (mole ratio: 81/19) copolymerized polycarbonate diol (A1-2) ("BENEBiOL NL2080DB" available from Mitsubishi Chemical Corporation) having an Mn of 2,018 (hydroxyl value = 55.6 mg KOH/g), 60 parts of 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 9.6 parts of the ethylene glycol (C-1), 73.1 parts of the MDI (B-1), and 660 parts of DMF. A reaction was performed at 65°C for 20 hours in a dry nitrogen atmosphere, thus obtaining a solution of a polyurethane resin (D-2) having a resin concentration of 30% by weight, a viscosity of 95,000 mPa·s/20°C, and a coagulation value of 3.4.

Example 3

To a reaction vessel of the same type as the one used in Example 1 were added 120 parts of the 1,10-decanediol/1,4-butanediol (mole ratio: 81/19) copolymerized polycarbonate diol (A1-2) ("BENEBiOL NL2080DB" available from Mitsubishi Chemical Corporation) having an Mn of 2,018 (hydroxyl value = 55.6 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 10.9 parts of 1,4-butanediol (C-2), 60.8 parts of the MDI (B-1), and 634 parts of DMF. A reaction was performed at 65°C for 20 hours in a dry nitrogen atmosphere, thus obtaining a solution of a polyurethane resin (D-3) having a resin concentration of 30% by weight, a viscosity of 91,000 mPa·s/20°C, and a coagulation value of 3.5.

Example 4

To a reaction vessel of the same type as the one used in Example 1 were added 120 parts of 1,10-decanediol/1,4-butanediol (mole ratio: 71/29) copolymerized polycarbonate diol (A1-3) ("BENEBiOL NL2070DB" available from Mitsubishi Chemical Corporation) having an Mn of 1,989 (hydroxyl value = 56.4 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 8.9 parts of the ethylene glycol (C-1), 67.5 parts of the MDI (B-1), and 645 parts of DMF. A reaction was performed at 65°C for 20 hours in a dry nitrogen atmosphere, thus obtaining a solution of a polyurethane resin (D-4) having a resin concentration of 30% by weight, a viscosity of 80,000 mPa·s/20°C, and a coagulation value of 3.7.

Example 5

To a reaction vessel of the same type as the one used in Example 1 were added 120 parts of the 1,10-decanediol/1,4-butanediol (mole ratio: 71/29) copolymerized polycarbonate diol (A1-3) ("BENEBiOL NL2070DB" available from Mitsubishi Chemical Corporation) having an Mn of 1,989 (hydroxyl value = 56.4 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 11.5 parts of the 1,4-butanediol (C-2), 60.1 parts of the MDI (B-1), and 634 parts of DMF. A reaction was performed at 65°C for 20 hours in a dry nitrogen atmosphere, thus obtaining a solution of a polyurethane resin (D-5) having a resin concentration of 30% by weight, a viscosity of 95,000 mPa·s/20°C, and a coagulation value of 3.6.

Example 6

To a reaction vessel of the same type as the one used in Example 1 were added 120 parts of the 1,10-decanediol/1,4-butanediol (mole ratio: 71/29) copolymerized polycarbonate diol (A1-3) ("BENEBiOL NL2070DB" available from Mitsubishi Chemical Corporation) having an Mn of 1,989 (hydroxyl value = 56.4 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), and 59.3 parts of the MDI (B-1). A reaction was performed at 80°C for 3 hours in a dry nitrogen atmosphere, thus obtaining an NCO-terminated urethane prepolymer (NCO% = 5.43% by weight). The urethane prepolymer was cooled to room temperature. Subsequently, 610 parts of DMF was added and uniformly dissolved, thus obtaining a solution of a urethane prepolymer (NCO% = 1.29% by weight). Next, 2.3 parts of water was added, and the mixture was reacted at 55°C for 6 hours. Subsequently, 10 parts of methanol was added to terminate the reaction, thus obtaining a solution of a polyurethane resin (D-6) having a resin concentration of 25% by weight, a viscosity of 20,000 mPa·s/20°C, and a coagulation value of 3.6.

Example 7

To a pressurizable vessel equipped with a stirrer and a thermometer were added 120 parts of the 1,10-decanediol/1,4-butanediol (mole ratio: 71/29) copolymerized polycarbonate diol (A1-3) ("BENEBiOL NL2070DB" available from Mitsubishi Chemical Corporation) having an Mn of 1,989 (hydroxyl value = 56.4 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 0.01 parts of the ethylene glycol (C-1), 5.02 part of 2,2-dimethylol propionic acid (DMPA) (G-1), 56.0 parts of HDI (B-2), and 112 parts of acetone. After the reaction system was purged with nitrogen gas, a reaction was performed at 80°C for 12 hours under stirring, thus obtaining a solution of an isocyanate group-terminated urethane prepolymer in acetone. The solution in acetone was cooled to room temperature. Then, to the solution were added 2.1 parts of Irganox 245 (BASF), 3.5 parts of Tinuvin 144 (BASF), and 7.0 parts of Tinuvin 900 (BASF) as weathering stabilizers; 742.9 parts of acetone as a diluting solvent; and 7.1 parts of triethylamine as a neutralizer. Then, 583.3 parts of water was added to the solution in acetone, and the solution was stirred with a homomixer for 1 minute to obtain an emulsion. Subsequently, acetone was distilled off under a reduced pressure. The resulting product was cooled to room temperature, and the solids concentration was adjusted to 40% by weight by adding water, thus obtaining an aqueous polyurethane resin dispersion (P-1).

Example 8 (Reference Example)

To a four-neck flask equipped with a stirrer and a thermometer were added 120 parts of 1,10-decanediolpolycarbonate diol (A1-4) having an Mn of 2,003 (hydroxyl value = 56.0 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 8.0 parts of the ethylene glycol (C-1), 57.3 parts of the MDI (B-1), and 619 parts of DMF. A reaction was performed at 70°C for 15 hours in a dry nitrogen atmosphere, thus obtaining a solution of a polyurethane resin (D-7) having a resin concentration of 30% by weight, a viscosity of 73,000 mPa·s/20°C, and a coagulation value of 3.4.

Example 9

To a four-neck flask equipped with a stirrer and a thermometer were added 120 parts of 1,10-decanediol/1,4-butanediol (mole ratio: 55/45) copolymerized polycarbonate diol (A1-5) ("BENEBiOL NL2055DB" available from Mitsubishi Chemical Corporation) having an Mn of 2,017 (hydroxyl value = 55.6 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 8.6 parts of the ethylene glycol (C-1), 59.5 parts of the MDI (B-1), and 626 parts of DMF. A reaction was performed at 70°C for 15 hours in a dry nitrogen atmosphere, thus obtaining a solution of a polyurethane resin (D-8) having a resin concentration of 30% by weight, a viscosity of 99,000 mPa·s/20°C, and a coagulation value of 5.1.

Example 10 (Reference Example)

To a four-neck flask equipped with a stirrer and a thermometer were added 120 parts of the 1,10-decanediolpolycarbonate diol (A1-4) having an Mn of 2,003 (hydroxyl value = 56.0 mg KOH/g), 80 parts of poly[(ethylene adipate)-co-(butylene adipate)] diol ("SANESTER 24625-Y" available from Sanyo Chemical Industries, Ltd.) (A3-1) having an Mn of 2,485 (hydroxyl value = 45.2 mg KOH/g), 8.9 parts of the ethylene glycol (C-1), 58.9 parts of the MDI (B-1), and 625 parts of DMF. A reaction was performed at 70°C for 15 hours in a dry nitrogen atmosphere, thus obtaining a solution of a polyurethane resin (D-9) having a resin concentration of 30% by weight, a viscosity of 76,000 mPa·s/20°C, and a coagulation value of 3.3.

Example 11 (Reference Example)

To a four-neck flask equipped with a stirrer and a thermometer were added 120 parts of 1,9-nonanediolpolycarbonate diol (A1-6) having an Mn of 2,003 (hydroxyl value = 56.3 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 8.4 parts of the ethylene glycol (C-1), 58.9 parts of the MDI (B-1), and 624 parts of DMF. A reaction was performed at 70°C for 15 hours in a dry nitrogen atmosphere, thus obtaining a solution of a polyurethane resin (D-10) having a resin concentration of 30% by weight, a viscosity of 101,000 mPa·s/20°C, and a coagulation value of 3.4.

Comparative Example 1

To a reaction vessel of the same type as the one used in Example 1 were added 200 parts of the 1,10-decanediol/1,4-butanediol (mole ratio: 81/19) copolymerized polycarbonate diol (A1-2) ("BENEBiOL NL2080DB" available from Mitsubishi Chemical Corporation) having an Mn of 2,018 (hydroxyl value = 55.6 mg KOH/g), 12.5 parts of the 1,4-butanediol (C-2), 65.4 parts of the MDI (B-1), and 648 parts of DMF. A reaction was performed at 70°C for 15 hours in a dry nitrogen atmosphere, thus obtaining a solution of a polyurethane resin (D'-1) having a resin concentration of 30% by weight, a viscosity of 90,000 mPa·s/20°C, and a coagulation value of 2.6.

Comparative Example 2

To a reaction vessel of the same type as the one used in Example 1 were added 200 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 12.8 parts of the 1,4-butanediol (C-2), 67.1 parts of the MDI (B-1), and 653 parts of DMF. A reaction was performed at 70°C for 15 hours in a dry nitrogen atmosphere, thus obtaining a solution of a polyurethane resin (D'-2) having a resin concentration of 30% by weight, a viscosity of 82,000 mPa·s/20°C, and a coagulation value of 6.0.

Comparative Example 3

To a reaction vessel of the same type as the one used in Example 1 were added 120 parts of the 1,10-decanediol/1,4-butanediol (mole ratio: 81/19) copolymerized polycarbonate diol (A1-2) ("BENEBiOL NL2080DB" available from Mitsubishi Chemical Corporation) having an Mn of 2,018 (hydroxyl value = 55.6 mg KOH/g), 80 parts of 1,6-hexanediolpolycarbonate diol (A2'-1) having an Mn of 2,000 (hydroxyl value = 56.1 mg KOH/g), 12.6 parts of the 1,4-butanediol (C-2), 66.0 parts of the MDI (B-1), and 650 parts of DMF. A reaction was performed at 70°C for 15 hours in a dry nitrogen atmosphere, thus obtaining a solution of a polyurethane resin (D'-3) having a resin concentration of 30% by weight, a viscosity of 82,000 mPa·s/20°C, and a coagulation value of 3.3.

Comparative Example 4

To a reaction vessel of the same type as the one used in Example 1 were added 120 parts of the 1,6-hexanediolpolycarbonate diol (A2'-1) having an Mn of 2,000 (hydroxyl value = 56.1 mg KOH/g), 80 parts of the 3-methyl-1,5-pentanediol/1,6-hexanediol (mole ratio: 85/15) copolymerized polycarbonate diol (A2-2) having an Mn of 1,979 (hydroxyl value = 57.5 mg KOH/g), 12.7 parts of the 1,4-butanediol (C-2), 66.5 parts of the MDI (B-1), and 652 parts of DMF. A reaction was performed at 70°C for 15 hours in a dry nitrogen atmosphere, thus obtaining a solution of a polyurethane resin (D'-4) having a resin concentration of 30% by weight, a viscosity of 86,000 mPa·s/20°C, and a coagulation value of 5.4.

Comparative Example 5

To a reaction vessel of the same type as the one used in Example 7 were added 120 parts of the 1,10-decanediol/1,4-butanediol (mole ratio: 71/29) copolymerized polycarbonate diol (A1-3) ("BENEBiOL NL2070DB" available from Mitsubishi Chemical Corporation) having an Mn of 1,989 (hydroxyl value = 56.4 mg KOH/g), 80 parts of the 1,6-hexanediolpolycarbonate diol (A2'-1) having an Mn of 2,000 (hydroxyl value = 56.1 mg KOH/g), 8.9 parts of the ethylene glycol (C-1), 5.02 parts of the DMPA (G-1), 56.0 parts of the hexamethylene diisocyanate (HDI) (B-2), and 112 parts of acetone. After the reaction system was purged with nitrogen gas, a reaction was performed at 80°C for 12 hours under stirring, thus obtaining a solution of an isocyanate group-terminated urethane prepolymer in acetone. The resulting solution in acetone was cooled to room temperature. Then, to the solution were added 2.1 parts of Irganox 245, 3.5 parts of Tinuvin 144, and 7.0 parts of Tinuvin 900 as weathering stabilizers; 742.9 parts of acetone as a diluting solvent; and 7.1 parts of triethylamine as a neutralizer. Then, 583.3 parts of water was added to the solution in acetone, and the solution was stirred with a homomixer for 1 minute to obtain an emulsion. Subsequently, acetone was distilled off under a reduced pressure. The resulting product was cooled to room temperature, and the solids concentration was adjusted to 40% by weight by adding water, thus obtaining an aqueous polyurethane resin dispersion (P'-1).

The polycarbonate diol (A1), the polycarbonate diol (A2), and the polyester diol (A3) used in the examples were subjected to measurement of melting point and heat of fusion by the following methods. Separately, a mixture (AM) was prepared by mixing the polycarbonate diol (A1), the polycarbonate diol (A2), and the polyester diol (A3) used in the examples in the same ratio as that of these components as constituent monomers of the polyurethane resin, and its melting point (Tm) and heat of fusion (ΔH) were measured. In each example, the difference between the melting point (T1) of the polycarbonate diol (A1) used and the melting point (Tm) of the mixture (AM) was determined.

Table 1 and Table 2 tabulate the compositions and physical properties of the polyurethane resins obtained in Examples 1 to 11 and Comparative Examples 1 to 5. Tables 1 and 2 also show evaluation results of porous sheets and nonporous sheets produced using the polyurethane resins obtained in Examples 1 to 11 and Comparative Examples 1 to 5 by the following method. These sheets were evaluated for condition of cross-sectional cells, texture, durability, and mechanical strength by the following methods.

Abbreviations of diols and polyesters in Table 1 and Table 2 indicate as follows.

    1,10-DD: 1,10-decanediol (alkanediol (a1-1))
    1,9-ND: 1,9-nonanediol (alkanediol (a1-2))
    1,4-BD: 1,4-butanediol (alkanediol (a2-1) or chain extender (C))
    3-MPD: 3-methyl-1,5-pentanediol (alkanediol (a3-1))
    1,6-HD: 1,6-hexanediol (alkanediol (a3-2))
    EG: ethylene glycol (chain extender (C))
    24625-Y: poly[(ethylene adipate)-co-(butylene adipate)] diol ("SANESTER 24625-Y" available from Sanyo Chemical Industries, Ltd.) (polyester diol (A3-1))
    MDI: 4,4'-diphenylmethane diisocyanate (organic diisocyanate (B))
    HDI: hexamethylene diisocyanate (organic diisocyanate (B))

[Evaluation method]

[1] Measurement methods of melting points (T1 and Tm) and heat of fusion (ΔH)

The method specified in JIS K 7121:1987 was performed using a differential scanning calorimeter (manufacturer: TA Instruments Japan Inc.; model: Q20). Specifically, samples were heated from 20°C to 80°C at a temperature increase rate of 10°C/min; maintained at 80°C for 10 minutes; cooled to 20°C at a temperature decrease rate of 10°C/min; maintained at 20°C for 10 minutes; and again heated to 80°C at a temperature increase rate of 10°C/min. Then, the melting point was determined from the melting peak in the second temperature increase, and the heat of fusion was determined from the heat balance at the melting peak.

[2] Porous sheet evaluation

(1) Porous sheet production

The polyurethane resin solution was diluted in DMF to a solids concentration of 15% by weight, and applied to a polyester film to a thickness of 1 mm (wet thickness), followed by immersion in 30% by weight aqueous DMF at 35°C for 30 minutes for coagulation. Then, the coagulate was washed with heated water at 60°C for 30 minutes and with water at 25°C for 20 minutes. Subsequently, the coagulate was dried with hot air at 80°C. The resulting sheet was released from the polyester film, and a porous sheet was thus obtained.

(2) Evaluation method of porous sheet

The sheets were evaluated as follows. Condition of cross-sectional cells: The cross section of the sheet was observed under an electronic microscope (manufacturer: Keyence Corporation; model: VHX-D500/510). Texture: The texture was evaluated by a sensory test based on feel on the hand.
Durability: The resulting sheet was cut into a size of 10 cm × 10 cm, and the piece was folded 30 times to visually determine whether or not wrinkles were made from folding. When no wrinkles were made from folding 30 times, the piece was additionally folded. The number of times of folding until wrinkles were formed was recorded for quality evaluation.
For the aqueous polyurethane resin dispersions of Example 7 and Comparative Example 5, nonporous sheets were obtained by the following method, and were subjected to measurement of condition of cross-sectional cells, texture, and durability. Tables 1 and 2 show the evaluation results.

[3] Nonporous sheet evaluation

(1) Nonporous sheet production

The polyurethane resin solution was diluted in DMF to a solids concentration of 25% by weight, and applied to a polyester film to a thickness of 1 mm (wet thickness), followed by drying in a hot-air dryer at 60°C for 3 hours and subsequently in a reduced pressure dryer at 60°C for 3 hours. The resulting sheet was removed from the polyester film, and a nonporous sheet was thus obtained.

The method of producing a nonporous sheet from the aqueous polyurethane resin dispersion (P) is as follows. In the case of the aqueous dispersants of Example 7 and Comparative Example 5, the aqueous polyurethane resin dispersion (P) was poured into a polypropylene mold (10 cm $\times$ 20 cm $\times$ 0.1 cm) such that the thickness of the resulting film after drying was 200 $\mu$m, followed by drying at room temperature for 12 hours and in a circulating dryer at 105°C for 3 hours. Thus, a nonporous sheet was obtained.

(2) Evaluation method of stress at 100% strain, tensile strength at break, and elastic recovery rate

The nonporous sheet obtained above was subjected for a tension test according to JIS K 7161-1:2014 to measure the stress at 100% strain and the tensile strength at break. The resulting porous sheet has a softer texture as the stress at 100% strain is lower. The elastic recovery rate was determined as follows. The produced film was cut into a size of 80 mm (length) $\times$ 10 mm (width) to obtain a strip-shaped sample. Lines were marked on the sample such that the distance between the marked lines was 50 mm, and the sample was placed on chucks of a tensile tester that was used to measure the stress at 100% strain and the tensile strength at break. Then, the sample was stretched at a constant rate of 200 mm/min in an atmosphere at 25°C until the distance between the marked lines was 150 mm, and kept in that state for 2 minutes. Subsequently, the distance between the chucks was returned to the original distance where the sample was placed before stretching, and the distance between the marked lines at which the stress became zero ($M_1$: unit = mm) was determined. Then, the elastic recovery rate was calculated from the following formula.

$$\texttt{Elastic recovery rate (\%) = 100} \times \texttt{(150 - } M_1\texttt{)/(150 - 50)}$$

The resulting porous sheet is more resistant to wrinkles from folding and has better durability as the value of the elastic recovery rate is larger.

[Table 1]

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Type of polyurethane resin | | D-1 | D-2 | D-3 | D-4 | D-5 | D-6 | P-1 | D-7 | D-8 | D-9 | D-10 |
| Polycarbonate diol (A1) | Alkanediols (a1-1) and (a1-2) | 1,10-DD | 1,10-DD | 1,10-DD | 1,10-DD | 1,10-DD | 1,10-DD | 1,10-DD | 1,10-DD | 1,10-DD | 1,10-DD | 1,9-ND |
| | Alkanediol (a2-1) | 1,4-BD | 1,4-BD | 1,4-BD | 1,4-BD | 1,4-BD | 1,4-BD | 1,4-BD | - | 1,4-BD | - | - |
| | Molar percentage (%) of (a1) relative to the total of (a1) and (a2) | 91 | 81 | 81 | 71 | 71 | 71 | 71 | 100 | 55 | 100 | 100 |
| | Melting point (T1) (°C) | 51.2 | 472 | 472 | 43.8 | 43.8 | 43.8 | 43.8 | 55.7 | 35.0 | 55.7 | 58.3 |
| | Heat of fusion ($\Delta H$) (J/g) | 68.1 | 61.5 | 61.5 | 54.8 | 54.8 | 54.8 | 54.8 | 78.9 | 40.3 | 78.9 | 692 |
| Polycarbonate diol (A2) | Alkanediol (a3-1) | 3-MPD | 3-MPD | 3-MPD | 3-MPD | 3-MPD | 3-MPD | 3-MPD | 3-MPD | 3-MPD | - | 3-MPD |
| | Alkanediol (a3-2) | 1,6-HD | 1,6-HD | 1,6-HD | 1,6-HD | 1,6-HD | 1,6-HD | 1,6-HD | 1,6-HD | 1,6-HD | - | 1,6-HD |
| | Melting point (°C) | Not observed | Not observed | Not observed | Not observed | Not observed | Not observed | Not observed | Not observed | Not observed | - | Not observed |
| | Heat of fusion ($\Delta H$) (J/g) | 0 | 0 | 0 | 0 | 0 | 0 | 0 | 0 | 0 | - | 0 |

(continued)

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Polyester diol (A3) | Polyester diol (A3-1) | - | - | - | - | - | - | - | - | - | 24625- Y | - |
| | Melting point (°C) | - | - | - | - | - | - | - | - | - | Not observed | - |
| | Heat of fusion (ΔH) (J/g) | - | - | - | - | - | - | - | - | - | 0 | - |
| Weight ratio (%) of (A1) to total of (A1) to (A3) | | 50 | 70 | 60 | 60 | 60 | 60 | 60 | 60 | 60 | 60 | 60 |
| Difference (T1-Tm) between melting point (T1) of (A1) and melting point (Tm) of mixture (AM) (°C) | | 0.8 | 0.9 | 0.9 | 0.0 | 0.0 | 0.0 | 0.0 | 0.6 | 0.2 | 0.5 | 0.2 |
| Heat of fusion (ΔH) (J/g) of mixture (AM) | | 36.4 | 31.5 | 31.5 | 31.5 | 31.5 | 31.5 | 31.5 | 44.1 | 30.5 | 35.6 | 39.2 |
| Organic diisocyanate (B) | | MDI | MDI | MDI | MDI | MDI | MDI | HDI | MDI | MDI | MDI | MDI |
| Chain extender (C) | | EG | EG | 1,4-BD | EG | 1,4-BD | Water | EG | EG | EG | EG | EG |

(continued)

| | | Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Evaluation results (Porous sheet) | Condition of cross-sectional cells | Uniform micropores | Uniform micropores | Uniform micropores | Uniform micropores | Uniform micropores | Uniform micropores | Nonporous film | Uniform micropores | Uniform micropores | Uniform micropores | Uniform micropores |
| | Texture | Soft | Soft | Soft | Soft | Soft | Soft | Soft | Soft | Soft | Soft | Soft |
| | Durability (after 30 times of folding) | No wrinkles | No wrinkles | No wrinkles | No wrinkles | No wrinkles | No wrinkles | No wrinkles | No wrinkles | No wrinkles | No wrinkles | No wrinkles |
| | Durability (number of times of folding until wrinkles were formed) | 60 | 81 | 80 | 97 | 95 | 107 | 55 | 46 | 115 | 96 | 50 |
| Evaluation results (Nonporous sheet) | Stress at 100% strain (MPa) | 5.1 | 4.7 | 4.9 | 4.5 | 4.7 | 5.2 | 5.7 | 5.4 | 4.2 | 4.0 | 5.0 |
| | Tensile strength at break (MPa) | 64 | 60 | 61 | 55 | 50 | 66 | 52 | 70 | 55 | 61 | 67 |
| | Elastic recovery rate (%) | 75 | 78 | 76 | 80 | 79 | 82 | 74 | 74 | 83 | 79 | 74 |
| (Examples 8, 10 and 11 are Reference Examples) | | | | | | | | | | | | |

EP 3 590 986 B1

[Table 2]

| | | Comparative Example | | | | |
|---|---|---|---|---|---|---|
| | | 1 | 2 | 3 | 4 | 5 |
| Type of polyurethane resin | | D'-1 | D'-2 | D'-3 | D'-4 | P'-1 |
| Polycarbonate diol (A1) | Alkanediols (a1-1) and (a1-2) | 1,10-DD | - | 1,10-DD | - | 1,10-DD |
| | Alkanediol (a2-1) | 1,4-BD | - | 1,4-BD | - | 1,4-BD |
| | Molar percentage (%) of (a1) relative to the total of (a1) and (a2) | 81 | - | 81 | - | 71 |
| | Melting point (T1) (°C) | 47.2 | - | 47.2 | - | 43.8 |
| | Heat of fusion ($\triangle$H) (J/g) | 61.5 | - | 61.5 | - | 54.8 |
| Polycarbonate diol (A2) | Alkanediol (a3-1) | - | 3-MPD | - | 3-MPD | - |
| | Alkanediol (a3-2) | - | 1,6-HD | - | 1,6-HD | - |
| | Melting point (°C) | - | Not observed | - | Not observed | - |
| | Heat of fusion ($\triangle$H) (J/g) | - | 0 | - | 0 | - |
| Polycarbonate diol (A2') for comparison | Alkanediol (a3-2) | - | - | 1,6-HD | 1,6-HD | 1,6-HD |
| | Melting point (°C) | - | - | 50.7 | 50.7 | 50.7 |
| | Heat of fusion ($\triangle$H) (J/g) | - | - | 39.8 | 39.8 | 39.8 |
| Weight ratio (%) of (A1) to total of (A1) to (A3) | | - | - | - | - | - |
| Difference (T1 - Tm) between melting point (T1) of (A1) and melting point (Tm) of mixture (AM) (°C) | | - | - | - | - | - |
| Heat of fusion ($\triangle$H) (J/g) of mixture (AM) | | - | - | - | - | - |
| Organic diisocyanate (B) | | MDI | MDI | MDI | MDI | HDI |
| Chain extender (C) | | 1,4-BD | 1,4-BD | 1,4-BD | 1,4-BD | EG |

(continued)

| | | Comparative Example | | | | |
|---|---|---|---|---|---|---|
| | | 1 | 2 | 3 | 4 | 5 |
| Evaluation results (Porous sheet) | Condition of cross-sectional cells | Mixture of portions with large pores and without pores | Mixture of portions with large pores and without pores | Uniform micropores | Mixture of portions with large pores and micorpores | Nonporous film |
| | Texture | Hard | Soft | Hard | Hard | Hard |
| | Durability (after 30 times of folding) | Wrinkled from folding | Wrinkled from folding | No wrinkles | No wrinkles | No wrinkles |
| | Durability (number of times of folding until wrinkles were formed) | - | - | 51 | 97 | 75 |
| Evaluation results (Nonporous sheet) | Stress at 100% strain (MPa) | 6.3 | 4.2 | 6.0 | 6.5 | 6.1 |
| | Tensile strength at break (MPa) | 58 | 52 | 75 | 72 | 56 |
| | Elastic recovery rate (%) | 70 | 71 | 74 | 80 | 74 |

INDUSTRIAL APPLICABILITY

The porous sheet material and the nonporous sheet material obtainable from the polyurethane resin of the present invention have soft texture, excellent mechanical strength, and excellent durability, and are thus highly useful as synthetic leather alternative to natural leather in a wide range of applications such as shoes, bags, clothes, furniture, and vehicle seats.

**Claims**

1.  A polyurethane resin (D) for synthetic leather, the polyurethane resin comprising, as essential constituent monomers:

    a polycarbonate diol (A1) having a structural unit derived from an alkanediol having 8 or more carbon atoms (a1) and a structural unit derived from an alkanediol having 3 to 5 carbon atoms (a2);
    a polycarbonate diol (A2) different from the polycarbonate diol (A1) and having a structural unit derived from an alkanediol having 4 to 6 carbon atoms (a3) and/or a polyester diol (A3);
    an organic diisocyanate (B); and
    a chain extender (C),
    wherein the polyurethane resin satisfies the following conditions (1) and (2):

    (1) the polycarbonate diol (A1) has a heat of fusion ($\Delta$H) of 40 to 100 J/g as determined by the method specified in JIS K 7121:1987; and
    (2) the polycarbonate diol (A2) and the polyester diol (A3) each have a heat of fusion ($\Delta$H) of 35 J/g or less as determined by the method specified in JIS K 7121:1987.

2.  The polyurethane resin according to claim 1,
    wherein the molar percentage of the structural unit derived from the alkanediol (a1) relative to the total mole number of structural units derived from the alkanediol (a1) and the alkanediol (a2) in the polycarbonate diol (A1) is 50 to 95% by mole.

**3.** The polyurethane resin according to claim 1 or 2,
wherein the alkanediols (a1) and (a2) are both linear alkanediols.

**4.** The polyurethane resin according to any one of claims 1 to 3,
wherein the alkanediol (a1) has a carbon number of 8 to 12.

**5.** The polyurethane resin according to any one of claims 1 to 4,
wherein the difference (T1 - Tm) is 1.5°C or less, where T1 is the melting point of the polycarbonate diol (A1) and Tm is the melting point of a mixture (AM) obtained by mixing the polycarbonate diol (A1) and the polycarbonate diol (A2) and/or the polyester diol (A3) in the same ratio as that of these components as constituent monomers of the polyurethane resin (D).

**6.** The polyurethane resin according to claim 5,
wherein the mixture (AM) has a heat of fusion ($\Delta$H) of 10 to 55 J/g as determined by the method specified in JIS K 7121:1987.

**7.** The polyurethane resin according to any one of claims 1 to 6,
wherein the polycarbonate diol (A2) and the polyester diol (A3) each have a heat of fusion ($\Delta$H) of 0 J/g as determined by the method specified in JIS K 7121:1987.

**8.** The polyurethane resin according to any one of claims 1 to 7,
wherein the weight percentage of the polycarbonate diol (A1) relative to the total weight of the polycarbonate diol (A1), the polycarbonate diol (A2), and the polyester diol (A3) is 30 to 80% by weight.

**9.** An aqueous polyurethane resin dispersion (P), comprising:
the polyurethane resin (D) according to any one of claims 1 to 8 that further contains, as a constituent monomer, a compound (G) having a hydrophilic group and an active hydrogen-containing group.

**Patentansprüche**

**1.** Polyurethanharz (D) für Synthetikleder, wobei das Polyurethanharz als essentielle konstitutionelle Monomere umfasst:

ein Polycarbonatdiol (A1) mit einer von einem Alkandiol (a1) mit 8 oder mehr Kohlenstoffatomen abgeleiteten Struktureinheit und einer von einem Alkandiol (a2) mit 3 bis 5 Kohlenstoffatomen abgeleiteten Struktureinheit, ein Polycarbonatdiol (A2), das sich von dem Polycarbonatdiol (A1) unterscheidet und eine von einem Alkandiol (a3) mit 4 bis 6 Kohlenstoffatomen abgeleitete Struktureinheit aufweist, und/oder ein Polyesterdiol (A3), ein organisches Diisocyanat (B) und
einen Kettenverlängerer (C),
wobei das Polyurethanharz die folgenden Bedingungen (1) und (2) erfüllt:

(1) das Polycarbonatdiol (A1) weist eine Schmelzwärme ($\Delta$H) von 40 bis 100 J/g, bestimmt durch das in JIS K 7121:1987 spezifizierte Verfahren, auf und
(2) das Polycarbonatdiol (A2) und das Polyesterdiol (A3) weisen jeweils eine Schmelzwärme ($\Delta$H) von 35 J/g oder weniger, bestimmt durch das in JIS K 7121:1987 spezifizierte Verfahren, auf.

**2.** Polyurethanharz gemäß Anspruch 1,
wobei der Molprozensatz der von dem Alkandiol (a1) abgeleiteten Struktureinheit, bezogen auf die Gesamtmolzahl der von dem Alkandiol (a1) und dem Alkandiol (a2) abgeleiteten Struktureinheiten in dem Polycarbonatdiol (A1), 50 bis 95 mol-% beträgt.

**3.** Polyurethanharz gemäß Anspruch 1 oder 2,
wobei die Alkandiole (a1) und (a2) beide lineare Alkandiole sind.

**4.** Polyurethanharz gemäß irgendeinem der Ansprüche 1 bis 3,
wobei das Alkandiol (a1) eine Kohlenstoffzahl von 8 bis 12 aufweist.

**5.** Polyurethanharz gemäß irgendeinem der Ansprüche 1 bis 4, wobei die Differenz (T1 - Tm) 15°C oder weniger beträgt, wobei T1 der Schmelzpunkt des Polycarbonatdiols (A1) ist und Tm der Schmelzpunkt einer Mischung (AM) ist, die durch Mischen des Polycarbonatdiols (A1) und des Polycarbonatdiols (A2) und/oder des Polyesterdiols (A3) in demselben Verhältnis wie das dieser Komponenten als konstitutionelle Monomere des Polyurethanharzes (D) erhalten wird.

**6.** Polyurethanharz gemäß Anspruch 5, wobei die Mischung (AM) eine Schmelzwärme (∆H) von 10 bis 55 J/g, bestimmt durch das in JIS K 7121:1987 spezifizierte Verfahren, aufweist.

**7.** Polyurethanharz gemäß irgendeinem der Ansprüche 1 bis 6, wobei das Polycarbonatdiol (A2) und das Polyesterdiol (A3) jeweils eine Schmelzwärme (∆H) von 0 J/g, bestimmt durch das in JIS K 7121:1987 spezifizierte Verfahren, aufweisen.

**8.** Polyurethanharz gemäß irgendeinem der Ansprüche 1 bis 7, wobei der Gewichtsprozentsatz des Polycarbonatdiols (A1), bezogen auf das Gesamtgewicht des Polycarbonatdiols (A1), des Polycarbonatdiols (A2) und des Polyesterdiols (A3), 30 bis 80 Gew.-% beträgt.

**9.** Wässrige Polyurethanharzdispersion (P), umfassend: das Polyurethanharz (D) gemäß irgendeinem der Ansprüche 1 bis 8, das ferner als konstitutionelles Monomer eine Verbindung (G) enthält, die eine hydrophile Gruppe und eine Gruppe aufweist, die einen aktiven Wasserstoff enthält.

**Revendications**

**1.** Résine de polyuréthane (D) pour cuir synthétique, la résine de polyuréthane comprenant, en tant que monomères constitutifs essentiels :
un polycarbonate diol (A1) présentant une unité structurale dérivée d'un alcanediol présentant 8 atomes de carbone ou plus (a1) et une unité structurale dérivée d'un alcanediol présentant de 3 à 5 atomes de carbone (a2) :

un polycarbonate diol (A2) différent du polycarbonate diol (A1) et présentant une unité structurale dérivée d'un alcanediol présentant de 4 à 6 atomes de carbone (a3) et/ou un polyester diol (A3) ;
un diisocyanate organique (B) ; et
un allongeur de chaîne (C),
dans laquelle la résine de polyuréthane répond aux conditions (1) et (2) suivantes :

(1) le polycarbonate diol (A1) présente une chaleur de fusion (∆H) de 40 à 100 J/g, telle que déterminée par le procédé énoncé dans la norme JIS K 7121:1987 ; et
(2) le polycarbonate diol (A2) et le polyester diol (A3) présentent chacun une chaleur de fusion (∆H) de 35 J/g ou moins, telle que déterminée par le procédé énoncé dans la norme JIS K 7121:1987.

**2.** Résine de polyuréthane selon la revendication 1, dans laquelle le pourcentage molaire de l'unité structurale dérivée de l'alcanediol (a1) par rapport au nombre total de moles d'unités structurales dérivées de l'alcanediol (a1) et de l'alcanediol (a2) dans le polycarbonate diol (A1) va de 50 à 95 % en mole.

**3.** Résine de polyuréthane selon la revendication 1 ou 2, dans laquelle les alcanediols (a1) et (a2) sont tous deux des alcanediols linéaires.

**4.** Résine de polyuréthane selon l'une quelconque des revendications 1 à 3, dans laquelle l'alcanediol (a1) présente un nombre de carbones allant de 8 à 12.

**5.** Résine de polyuréthane selon l'une quelconque des revendications 1 à 4, dans laquelle la différence (T1 - Tm) est inférieure ou égale à 1,5 °C, où T1 est le point de fusion du polycarbonate diol (A1) et Tm est le point de fusion d'un mélange (AM) obtenu en mélangeant le polycarbonate diol (A1) et le polycarbonate diol (A2) et/ou le polyester diol (A3) selon le même rapport que celui de ces composants en tant que monomères constitutifs de la résine de polyuréthane (D).

**6.** Résine de polyuréthane selon la revendication 5,
dans laquelle le mélange (AM) présente une chaleur de fusion ($\Delta$H) allant de 10 à 55 J/g telle que déterminée par le procédé énoncé dans la norme JIS K 7121:1987.

**7.** Résine de polyuréthane selon l'une quelconque des revendications 1 à 6,
dans laquelle le polycarbonate diol (A2) et le polyester diol (A3) présentent chacun une chaleur de fusion ($\Delta$H) de 0 J/g telle que déterminée par le procédé énoncé dans la norme JIS K 7121:1987.

**8.** Résine de polyuréthane selon l'une quelconque des revendications 1 à 7,
dans laquelle le pourcentage en poids du polycarbonate diol (A1) par rapport au poids total du polycarbonate diol (A1), du polycarbonate diol (A2) et du polyester diol (A3) va de 30 à 80 % en poids.

**9.** Dispersion de résine de polyuréthane aqueuse (P), comprenant :
la résine de polyuréthane (D) selon l'une quelconque des revendications 1 à 8 qui contient en outre, en tant que monomère constitutif, un composé (G) présentant un groupe hydrophile et un groupe contenant de l'hydrogène actif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60195117 A
- JP H02289616 A
- JP H02158617 A
- JP H03140318 A
- JP H047327 A
- JP H0532754 A
- JP H0551428 A
- EP 1688447 A1
- US 4013702 A
- US 4105641 A
- US 4524104 A
- JP 4222719 B
- JP 56041652 B
- JP 4539634 B
- JP 4539635 B
- US 3284274 A
- GB 1168872 A

**Non-patent literature cited in the description**

- **SCHNELL.** *Polymer Reviews,* 1964, vol. 9, 9-20